# EUROPEAN PATENT APPLICATION

(11) **EP 2 685 456 A1**
(43) Date of publication of application: **15.01.2014**
(21) Application number: 12176237.1
(22) Date of filing: 12.07.2012
(51) Int. Cl.: G11B 27/00, G11B 27/32, H04N 7/26, G11B 20/12

(54) **Index with offset to closest I-picture entry for random access in a bitstream.**

(71) Applicant: Universiteit Gent, 9000 Gent (BE)
(72) Inventor: Van Lancker, Wim, 9940 Sleidinge (BE); Van Deursen, Davy, 8710 Wielsbeke (BE); Van De Walle, Rik, 9880 Aalter (BE)
(74) Representative: Wauters, Davy Erik Angelo

(57) **Abstract**

A method and system for identifying a position of target data in a time-stamped data stream are described. The method comprises obtaining a time-stamped data stream, for example an MPEG-4 stream, and an index for said data stream, the index comprising a mapping table with a plurality of entries, each entry correlating a time stamp, a position _ or Byte offset_ of data in the stream, and the distance to the entry of the closest previous I-frame.
The method furthermore comprises obtaining a target timestamp for the target data to be found, and estimating, based on the target timestamp, a position of an estimated target entry in the index, the estimated target entry providing a correlation between an estimated target timestamp and the estimated target position in the data stream. Deriving, based on the estimated target entry, the position of the target data.

## Description

### Field of the invention

The invention relates to the field of data processing. More specifically it relates to methods and systems for processing a datastream, such as for example finding a particular portion in a time-stamped datastream, e.g. in a videostream.

### Background of the invention

Digital video resources are typically encoded using a video compression algorithm, usually an algorithm whereby a variable bit-rate is used for achieving maximum quality for a given file-size. For example, state-of-the art standardized video compression algorithms are H.264/AVC and VP8. Two different kinds of encoded frames exist: intra-coded and inter-coded. The intra-coded frame can be seen as a frame that can be decoded independent of other frames, i.e., like decoding a still image. An inter-coded frame is a frame that is dependent on previous (and/or) next frames in the video sequence. Intra-coded frames are called 'key frames' and can be seen as random access points in a video sequence.

When seeking an image or part of a video stream based on a target timestamp, key frames need to be taken into account since a video decoder is not able to start decoding from a frame other than a key frame. More specifically, at present the typical algorithm for seeking in a digital video resource is as follows.

In a first step, the byte offset - with respect to the start of the video stream - of the video frame is found that corresponds to the target timestamp. In a second step, in the encoded video sequence, the byte offset of the nearest key frameis found. Thereafter, this key frame is used to start decoding from the key frame found. The video renderer then starts displaying the video frames when the frame with the target timestamp is reached.

Two main approaches exist for seeking in a digital compressed video resource: index-based and non-index-based.

When no index is available, there are only encoded frames to perform the search on. A first (trivial) way to seek into such a video resource is searching sequentially in the video. More specifically, it is tested if the current frame contains the target timestamp, and if not, the process is continued with the next frame. This approach is applicable to all video compression formats, but suffers from timing issues, as the seeking time increases linearly with the length of the video sequence, and consequently seeking up to the last frame of a long video sequence will be very inefficient. A second way to seek into a video resource without an index structure is by applying a bisectional (e.g. logaritmic) search algorithm. The latter operates as follows : In a first step, a byte offset is guessed for the given target timestamp (this guess will usually be based on the length and size of the video resource). In a second step, this byte offset is sought and the timestamp of the corresponding frame is determined. If the found timestamp is too far from the target timestamp, a new guess is made. If the timestamp found is sufficiently close but does not correspond to the target timestamp, the sequential search method is applied until the frame with the target timestamp is found. If the target frame is found, the nearest key frame is searched and used.

Although the numbers of frames that need to be inspected is greatly reduced in comparison with the first approach, this is still not optimal since one has to search in the compressed video resource itself. Hence, this approach is still very much dependent on the size, length, and resolution of the video resource. This seeking method was applied in first versions of the Ogg container format (http://www.xiph.org/ogg/).

In order to minimize the time for seeking in digital video resources, index structures were introduced. An index structure can be seen as a mapping table where timestamp codes are mapped onto byte offsets. Thanks to such an index structure, one can jump directly to the right position in the video resource. In the next paragraphs, a number of index structures from frequently used media containers are described.

The MP4 container format introduces a sample table, containing all the time and data indexing of the media samples. Based on this table, it is possible to locate samples in time, determine their type (i.e., key frame or not), and determine their size and offset into the container. The sample table is in the first place necessary for the decoder to locate the actual samples, but can also be used for seeking purposes by linearly seeking through the index table.

The Ogg container format contains a key frame index, which provides a mapping between timestamp codes of the key frames and their byte offsets. The key frame index was introduced to avoid the old bisectional search method for seeking (see above).

The Matroska container format (and also the WebM format, which is a subset of Matroska) introduces the concept of a cue. Cues are the index for each track and are used for seeking to a specific timestamp.

A disadvantage of the above used method is that for long video sequences, the processing for finding the byte offset corresponding with the target timestamp, even if indexing is used, takes a long time, resulting in the rendering of certain video portions of a video sequence being too slow.

### Summary of the invention

It is an object of embodiments of the present invention to provide good methods and systems for retrieving particular parts in a time-stamped datastream, such as for example for retrieving images or video images in a video sequence and optionally the accompanying audio sequence.

It is an advantage of embodiments according to the present invention that the length of the data sequence is not deterministic for the time required for finding a portion, e.g. an image or a particular subsequence, in the data sequence, such as for example for finding a keyframe in an encoded video sequence corresponding or close to a given target time stamp.

It is an advantage of embodiments according to the present invention that the size of the data sequence (in terms of bytes) is not deterministic for the time required for finding an image or a portion of the data sequence, more particularly for finding a keyframe in an encoded data sequence corresponding or close to a given target time stamp.

It is an advantage of embodiments according to the present invention that the resolution of the data sequence is not deterministic for the time required for finding a portion of the data sequence, for example for finding a keyframe in an encoded video sequence corresponding or close to a given target time stamp.

It is an advantage of embodiments according to the present invention that the steps of finding a portion in an encoded data sequence, e.g. a key frame in an encoded video sequence, corresponding or close to a given target timestamp can be done fast. It is an advantage of embodiments according to the present invention that these steps can be performed in a constant time, if the number of data blocks per timestamp-interval are constant and if the timestamps are equidistant in time, which is the case for typical video streams..

It is an advantage of embodiments of the present invention that it allows seeking with a constant seeking time, also referred to as execution time, for typical video streams. This is in contrast to existing solutions based on index structures which are characterized by a linear execution time as function of the number of frames inside a video resource.

It is an advantage of embodiments of the present invention that no parsing of the full index structure is required before the index structure can be queried.

The above objective is accomplished by a method and device according to the present invention.

The present invention relates to a method for identifying a file-position of target data in a time-stamped data stream, the method comprising obtaining a time-stamped data stream and an index structure for said data stream, the index structure comprising a mapping table for the data stream comprising a plurality of blocks, each block correlating a time stamp and a data position of data in the data stream, obtaining a target timestamp for target data to be found, estimating, based on the target timestamp, a position of an estimated target block in the index structure, the estimated target block providing a correlation between an estimated target timestamp and the estimated target data position of data in the data stream and deriving based on the estimated target block a file position of the target data to be found. It is an advantage of embodiments according to the present invention that fast determination of a file position of target data can be determined, substantially independent of the resolution or length of the data stream.

Estimating a position of an estimated target block in the index structure may be based on a bi-sectional search algorithm applied to the index structure. Estimating a position of an estimated target block in the index structure may be be based on a non-linear and/or non-sequential searching algorithm. Estimating a position of an estimated target block in the index structure may comprise determining a position of an estimated target block as function of one or more of the average amount of blocks per timestamp, a size of a block and the target timestamp.

The index structure may comprise a plurality of blocks arranged in an order corresponding to increasing timestamps and wherein estimating a position of an estimated target block comprise selecting an estimated target block without evaluating the plurality of blocks sequentially according to their arranged order.

The method may comprise, after said estimating an estimated target block in the index structure, evaluating if the estimated target timestamp of said estimated target block corresponding with the target timestamp, is within a predetermined distance from the target timestamp or is outside a predetermined distance of the target timestamp.

If the estimated target timestamp is within a predetermined distance from the target timestamp, the method may comprise sequentially running through the index structure starting from the estimated target timestamp until the target timestamp is reached.

If the estimated target timestamp is not within a predetermined distance from the target timestamp, the method may comprise estimating a position of an new estimated target block in the index structure and repeating said evaluating for said new estimated target timestamp.

If the target timestamp is found, the method may comprise determining using said indexing structure the previous key data required for correctly calculating later data.

Determining the previous key data using said indexing structure may comprise retrieving a distance to the start of the previous key frame as stored in the block corresponding with the target timestamp found.

Obtaining an indexing structure may comprise determining an index structure, whereby the index structure may comprise fields representing at least a timestamp, a data position of data in the data stream and a distance to the start of the previous key data in the data stream required for correctly calculating later data.

Determining an index structure furthermore may comprise determining the amount of memory required for representing the maximum value of each one or of the timestamp, the data position of data in the data stream and the distance to the start of the previous key data and reducing the memory size of the fields to the determined amount of memory required.

The present invention also relates to a system for identifying a file-position of target data in a time-stamped data stream, the system comprising an input means for obtaining a time-stamped data stream and an index structure for said data stream, the index structure being a mapping table for the data stream comprising a plurality of blocks, each block correlating a time stamp and a data position of data in the data stream, the input means furthermore being adapted for obtaining a target timestamp for target data to be found, and a processing means for estimating, based on the target timestamp, a position of an estimated target block in the index structure, the estimated target block providing a correlation between an estimated target timestamp and the estimated target data position of data in the data stream and for deriving based on the estimated target block a file position of the target data to be found. The system may be adapted for performing a method as described above. The system may be implemented as a computer program product.

The present invention also relates to an index structure for use in a method for identifying a file position of target data in a time-stamped data stream, the index structure comprising a mapping table for the data stream comprising a plurality of blocks, each block correlating a time stamp and a data position of data in the data stream and comprising a distance to the closest previous key data required for correctly calculating later data.

The present invention also relates to a data carrier comprising a set of instructions for, when executed on a computer, identifying a file-position of target data in a time-stamped data stream, the method comprising obtaining a time-stamped data stream and an index structure for said data stream, the index structure comprising a mapping table for the data stream comprising a plurality of blocks, each block correlating a time stamp and a data position of data in the data stream, obtaining a target timestamp for target data to be found, and estimating, based on the target timestamp, a position of an estimated target block in the index structure, the estimated target block providing a correlation between an estimated target timestamp and the estimated target data position of data in the data stream and deriving based on the estimated target block a file position of the target data to be found.

The data carrier may be any of a CD-ROM, a DVD, a flexible disk or floppy disk, a tape, a memory chip, a processor or a computer.

The present invention also relates to a method for determining an index structure for a data stream, the method comprising deriving from the data stream a mapping table comprising a plurality of blocks, each block correlating a time stamp and a data position of data in the data stream and comprising a distance to the closest previous key data required for correctly calculating later data.

Particular and preferred aspects of the invention are set out in the accompanying independent and dependent claims. Features from the dependent claims may be combined with features of the independent claims and with features of other dependent claims as appropriate and not merely as explicitly set out in the claims. These and other aspects of the invention will be apparent from and elucidated with reference to the embodiment(s) described hereinafter.

### Brief description of the drawings

FIG. 1 describes an indexing component comprising an index table according to an embodiment of the present invention.
FIG. 2 describes a flow chart of a method for identifying particular parts in a data stream according to an embodiment of the present invention.
FIG. 3 illustrates a system for identifying particular parts in a data stream according to an embodiment of the present invention.
FIG. 4 illustrates a computing device suitable for implementing a method for identifying particular parts in a data stream according to an embodiment of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "data stream" or "data sequence", reference is made to any type of time-based data resource, such as for example video resources or audio resources, or resources comprising both audio and corresponding video (also known as "program"), or even resources comprising multiple programs.

Where in embodiments of the present invention reference is made to an index structure, reference is made to a mapping table, wherein timestamp codes are mapped onto byte offsets.Alternatively formulated, an index structure refers to a mapping table allowing frame numbers to be translated into file positions.

Where in embodiments according to the present invention reference is made to a frame, reference is made to a still image which composes together with all other images, the video sequence.

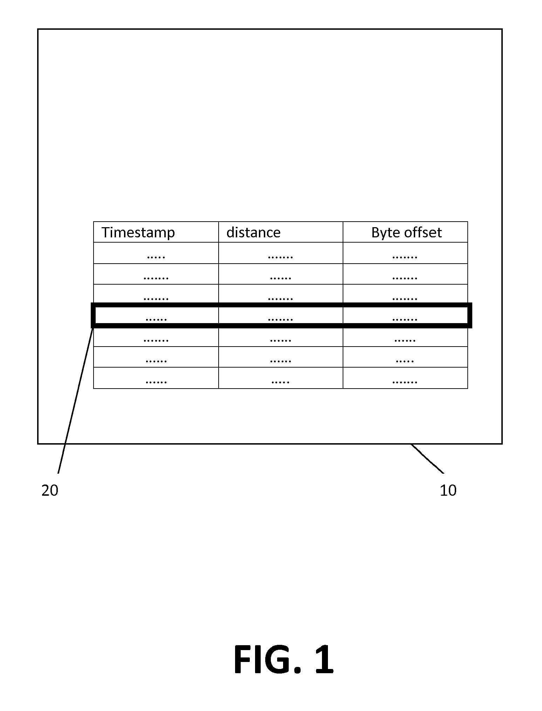

In a first aspect, the present invention relates to a method for identifying a particular part in a time-stamped datastream. The method may for example be especially suitable for identifying portions in video resources, although embodiments of the present invention are not limited thereto. The method for example also may be applied to an audio stream, a combination of a video stream and an audio stream, often also referred to as a program. The method also may be applicable to a plurality of programs. According to embodiments of the present invention the method for identifying a file-position of target data in a time-stamped data stream comprises obtaining a time-stamped data stream and an index structure for said data stream, the index structure comprising a mapping table for the data stream comprising a plurality of blocks, each block correlating a time stamp and a data position of data in the data stream. By way of illustration, an example of an index structure 10 is shown in FIG. 1. The index structure 10 as shown in FIG. 1 comprises a mapping table for the data stream comprising a plurality of blocks 20, each block 20 correlating a time stamp and a data position of data in the data stream and comprising a distance to the closest previous key data required for correctly calculating later data. A block 20 of the index structure 10 thus may comprise three fields being a timestamp (e.g. 8 bytes), a distance (in number of blocks) to the start of the previous key frame (e.g. 4 bytes) and a byte offset (e.g. 8 bytes). Each of the blocks in the index structure must have a fixed size. Such a size may be adapted during setting up of the index structure and may be optimized by reducing the memory size for the different fields to the maximum memory size required for representing the values in the different fields.

In other words, the size of the different fields may first be set to the initial size, and if necessary, the total size of a block can be optimized. When the index is created, its size can be optimized by determining for each field in a block the number of bytes that are needed to represent the maximum value for that field. For example, if the maximum value of the field "timestamp" is 200, then 1 byte is sufficient to represent the timestamp field of all blocks. This way, the table of blocks is very compact while still obtaining the same size in the index structure for each block of the time-stamped data-stream, e.g. videostream. By optimizing, e.g. minimizing the size of the index, the total index can be read faster from a medium, e.g. a hard-disk drive or an optical storage medium such as e.g. a CD-ROM or DVD or Blu-Ray disc, and requires less space in memory, e.g. RAM. It is an advantage of embodiments of the present invention that the indexstructure does not need to be obtained completely or sequentially, as a certain byte-offset can be directly selected. Dependent on the medium, this direct selection can result in a large gain or moderate gain in speed.

It is also to be noticed that a block does not impose any semantics related to video coding. More specifically, it can represent a single frame, a single slice, a single field, ... This means that multiple blocks can contain the same timestamp value (e.g., all slices belonging to the same frame). The index structure according to embodiments of the present invention may consist of a list of blocks on the one hand, and a configuration file on the other hand. The latter contains information about the clock used for representing the timestamps, the location of the actual data chunks, the size of the block fields, and other (optional) parameters about the video resource.

Returning now to embodiments of the present invention, the method according to embodiments of the present invention also comprises obtaining a target timestamp for target data to be found and estimating, based on the target timestamp, a position of an estimated target block in the index structure, the estimated target block providing a correlation between an estimated target timestamp and the estimated target data position of data in the data stream and deriving based on the estimated target block a file position of the target data to be found.

According to embodiments of the present invention estimating a position of an estimated target block in the index structure may be based on a bi-sectional search algorithm applied to the index structure. In other words, no sequential evaluation through the index structure is required. After estimating an estimated target block in the index structure, embodiments of the present invention may comprise evaluating if the estimated target timestamp of said estimated target block corresponds with the target timestamp, is within a predetermined distance from the target timestamp or is outside a predetermined distance of the target timestamp.

Embodiments of the present invention may use an index structure describing all the frames of the video resource. Also, the type of frame may be indicated (i.e., key frame or not) inside the index.

It is an advantage of embodiments of the present invention that, for identifying a portion in a data sequence, identifying a byte offset of a keyframe can be performed fast.

It furthermore is an advantage of embodiments according to the present invention that it is not necessary to parse the index structure: one can immediately jump to a guessed byte position inside the index structure because of the fixed index block sizes.

By way of illustration, embodiments of the present invention not being limited thereto, an exemplary method for identifying a particular part in a time-stamped datastream will further be described, illustrating features and advantages of at least some embodiments of the present invention.

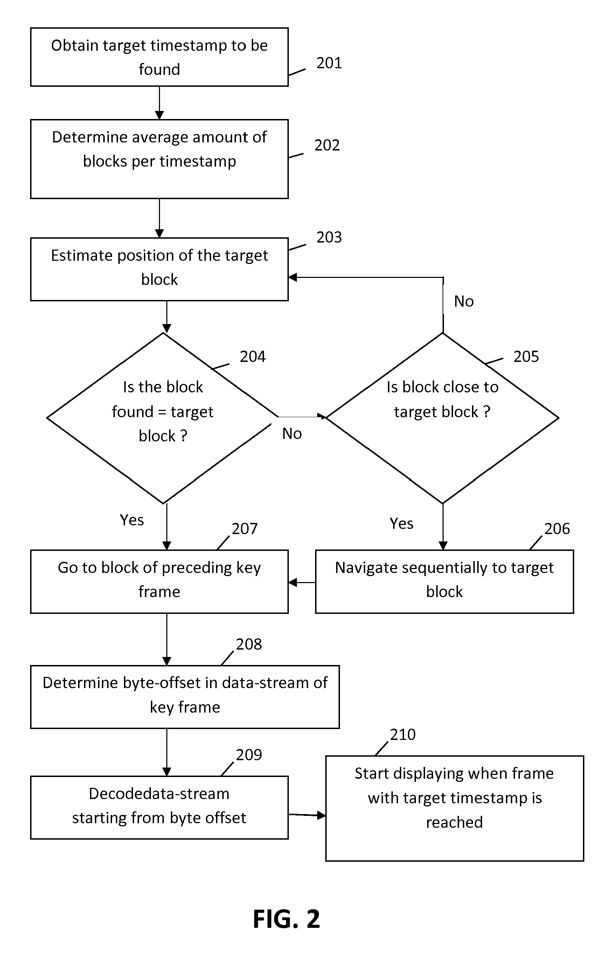

Referring to Fig 2, a method for determining the file-position (e.g. the byte-offset) of a frame having a certain timestamp 't' in a time-stamped data-stream (e.g. a time-stamped audio/video-file), works as follows. Assume that the time-stamped file has an index structure as shown in Fig 1, and that the index structure comprises blocks of a same size (e.g. 10 bytes each), and that the total number of blocks is 'B', and that the maximum value of the timestamp in the data-stream, and thus also in the index structure is 'Tmax'. It is further assumed that the time-stamps of the time-stamped data-stream are continuous values, i.e. without any discontinuities.

In a first step 201, the target timestamp 't' of the frame to be found, is obtained, e.g. requested from a user. In step 202 the average amount of blocks per timestamp is determined, using the formula: B/(Tmax+1). In Step 203 the position of the target block, i.e. the position of the block referring to the target frame, is estimated, e.g. using the formula:floor((B/(Tmax+1))*S*t), whereby floor() is a truncation-function providing the integer value equal to or smaller than the input value. For example floor (6,00) = 6, and floor(6,75)=6.The number of bytes S per block, and the maximum time-stamp Tmax may also be obtained in step 201. In step 204 the block with the estimated position is read, and its time-stamp is checked, and if this block is the target-block to be found, then the method goes to step 207, otherwise the method goes to step 205. In step 205 it is verified whether the block with the estimated position is "close to" the target block, e.g. by testing if the absolute value of the difference between the target timestamp and that of the estimated block is less than a certain threshold value TR. If that is the case, then the index structure is sequentially navigated in step 206until the target block is reached, using forward navigation if the timestamp of the estimated block is smaller than the target timestamp 't', using backward navigation if the timestamp of the estimated block is larger than the target timestamp 't'. If in step 205 it is decided that the estimated block is not "close to" the target block, then a newblock position is estimated in step 203, after updating the start- and end-position of the range of blocks to be investigated, in this case, by taking the estimated block position as its timestamp as the number of blocks 'B' and the maximum timestamp-value 'Tmax' respectively. If needed, multiple iterations will be performed until the estimated block position is equal to, or close to the target block position. When the target block position in the index structure is found, either coming from step 204 or step 206, the 'distance'-field of the block indicates the position in the index-structure of the previous key frame. If the value of the distance is the value D, then the navigation needs to go back D*S bytes in the index structure to reach the first block of the target key frame. Note that if the target frame is a key frame itself, this step can be omitted. In step 207 the block of that key frame is retrieved from the index structure. Subsequently, in step 208 the file position, e.g. the byte offset in the time-stamped data-stream of the key frame is determined, and in step 209 the corresponding data is retrieved from the time-stamped data-stream, and the data is decoded. Note that if the target frame is not a key frame, the target frame and any other frames between the key frame and the target frame need not be displayed, although at least some of them must be decoded before the target frame can be decoded (e.g. B-pictures in MPEG2-streams can be skipped, but P-frames preceding the target B or P-frame need to be decoded). Finally, in step 210 the target frame is decoded and displayed, as requested.

It is to be noticed that in practice the first estimate is often within the threshold-range, so that a second estimation is not required. This is because typically a relatively constant bitrate is used for encoding the data-stream. The method however also works for time-stamped data-streams wherein the number of data blocks per time stamp are variable or wherein the timestamps are not distributed equidistant in the data stream, in which case the loop formed by the steps 203, 204 and 205 implements a bisectional search algorithm in the index structure, which works extremely fast.

In a second aspect, embodiments of the present invention relate to a system for identifying a particular part in a time-stamped data stream. According to embodiments of the present invention, the system comprises an input means for obtaining a time-stamped data stream and an index structure for said data stream, the index structure being a mapping table for the data stream comprising a plurality of blocks, each block correlating a time stamp and a data position of data in the data stream. The input means furthermore is adapted for obtaining a target timestamp for target data to be found. The system furthermore comprises a processing means for estimating, based on the target timestamp, a position of an estimated target block in the index structure, the estimated target block providing a correlation between an estimated target timestamp and the estimated target data position of data in the data stream and for deriving based on the estimated target block a file position of the target data to be found. The processor may comprise several calculating, determining, navigating and decision making means, as will be illustrated further. The processor may be adapted for performing a method as described in the first aspect. The system may be implemented in hardware as well as in software.

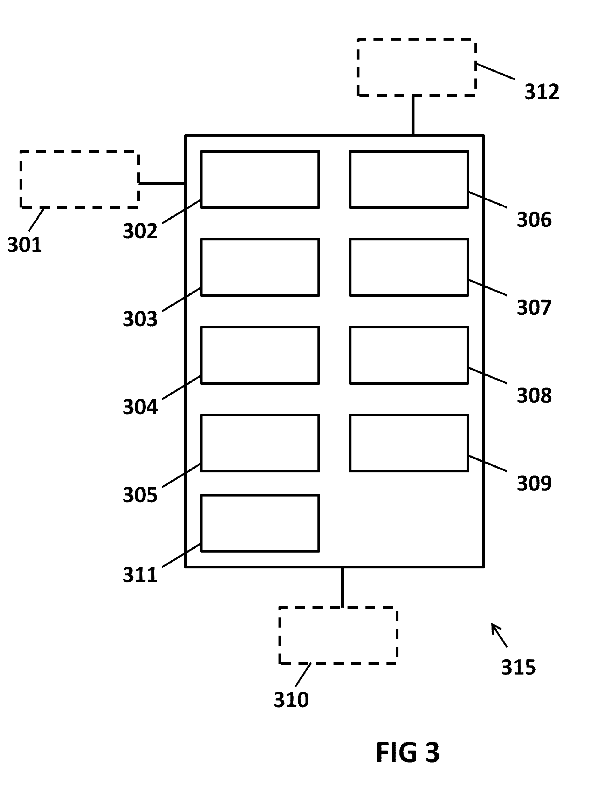

By way of illustration, embodiments of the present invention not being limited thereto, features and advantages of at least some embodiments of the present invention are further discussed with reference to FIG. 3. Fig 3 shows an example of an embodiment of a system for identifying a particular part in a time-stamped data-stream, e.g. a video-stream which can be stored on storage means 312, e.g. a hard-disk drive, an optical disc drive such as e.g. a DVD or Blu-Ray disc, or a flash device, or a remote storage device, etc. The system is capable of performing the method described above, and illustrated in Fig 2. An index structure of the time-stamped data-stream also can be stored on the storage means 312, the index structure having the structure described in relation to Fig 1. The system according to embodiments of the present invention may be adapted for indexing the video stream and storing it, or alternatively, the generation of the index structure may be made in a separate device and communicated to the system according to the present invention. The storage means 312 may be part of the system, or not. The system further comprises, or is connected to input receiving means 301, such as e.g. a keyboard, or an electronic interconnection, for receiving a target timestamp value 't' of the video frame to be displayed. The system further may comprise, or can be connected to presentation means 310, such as e.g. a video renderer, or display means for displaying the target frame. Thus, the storage means 312 and input receiving means 301 and presentation means 310 are optional parts of the system. The system (further) according to the example shown in FIG. 3 comprises first calculation means 302 for determining the average number of blocks per timestamp, e.g. by calculating the formula AVG = B/(Tmax+1), whereby B is the total number of blocks of the index structure, and Tmax is the maximum time-stamp present in the index-structure. The first calculation means 302 can be adapted for also receiving the values of B and Tmax from the input receiving means 301, or for obtaining the values otherwise, e.g. for retrieving them from the storage means 312.An input of the first calculation means typically is connected to an output of the input receiving means 301, and optionally also to an output of the storage means 312.The system further can comprise second calculation means 303 for estimating the position of the target block, i.e. the block in the index structure corresponding to the target frame in the time-stamped data-stream. The second calculation means 303 is, according to the example shown in FIG. 3, adapted for calculating the formula: POS = floor((AVG*S*t).An input of the second calculation means 303 can be connected to an output of the first calculation means 302.The system further may comprise first decision means 304 for retrieving the block at the estimated position in the index structure from the storage means 312, and for testing if the time-stamp of that block is equal to the target timestamp 't'. The first decision means has an input connected to an output of the second calculation means and to an output of the storage means 312.The system further may comprise second decision means 305 for testing if the timestamp of the retrieved block is "close to" the timestamp 't'. Thereto, the second decision means 305 may have calculation means for calculating the absolute value of a difference between the time-stamp of the retrieved block and the timestamp 't' of the target frame, and a comparator for testing if this absolute difference value is larger than a given threshold value TR. The threshold value TR may be obtained via the input receiving means 301, in which case the second decision means 305 is connected to the input receiving means 301, or the threshold value TR may be stored, e.g. hardcoded in the second decision means 305, or may be retrieved from the storage means 312.The system further may comprise first navigation means 306, for sequentially navigating the index-structure stored on the storage means 312, or a copy thereof stored in local memory 311 of the system until it arrives at the target block. In practice this may be implemented by increasing or decreasing a pointer value. The first navigation means 306 typically has an input connected to an output of the second decision means 305.The system further comprises second navigation means 307 adapted for navigating in the index structure to the block correspond to the key frame immediately preceding the target block, and for retrieving that block. In practice this navigation may be implemented by using the 'distance' field of the target block, from which the location of that block can be directly determined, taking into account the location of the current block. An input of the second navigation means 307 is connected to an output of the first navigation means 306 and to an output of the first decision means 304.The system further comprises third calculation means 308 for determining the file position, e.g. the byte offset in the time-stamped data-stream of the key frame immediately preceding the target frame. This byte offset is obtained directly from one of the fields stored in the block retrieved by the second navigation means 307. An input of the third calculation means 308 is, according to the present example shown in FIG. 3, connected to an output of the second navigation means 307.The system further comprises decoding means 309 for retrieving time-stamped data from the storage means 312, located at the byte-offset calculated in the third calculation means 308, and for decoding the data. The decoding means has an input connected to an output of the third calculation means 308, and has an input connected to the storage means 312, and has an output for providing the decoded data, e.g. decoded video data to the presentation means 310.

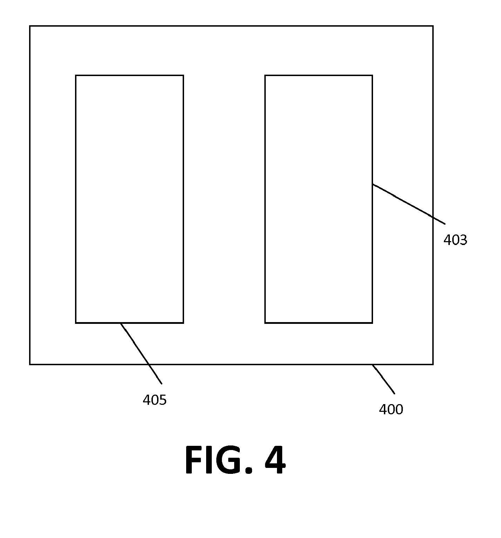

The above described system embodiment for identifying a particular part in a time-stamped datastream may correspond with an implementation of the method embodiments for identifying a particular part in a time-stamped datastream as a computer implemented invention in a processor 400. FIG. 4 shows one configuration of a processor 400 that includes at least one programmable computing component 403 coupled to a memory subsystem 405 that includes at least one form of memory, e.g., RAM, ROM, and so forth. It is to be noted that the computing component 403 or computing components may be a general purpose, or a special purpose computing component, and may be for inclusion in a device, e.g., a chip that has other components that perform other functions. Thus, one or more aspects of the present invention can be implemented in digital electronic circuitry, or in computer hardware, firmware, software, or in combinations thereof. For example, each of the simulation steps may be a computer implemented step. Thus, while a processor 400 such as shown in FIG. 4 is prior art, a system that includes the instructions to implement aspects of the methods for identifying a particular part in a time-stamped datastream is not prior art, and therefore FIG. 4 is not labelled as prior art. The present invention thus also includes a computer program product which provides the functionality of any of the methods according to the present invention when executed on a computing device.

The processor 400 may be connected to a local memory, e.g. RAM, and, e.g. for the system as described in the example of FIG. 4, the first calculation means 302, second calculation means 303, first decision means 304, second decision means 305, first navigation means 306, second navigation means 307, third calculation means 308, decoding means 309 may all be implemented as software routines or program steps, as part of an algorithm that can be executed by the processor 400. Optionally the algorithm further comprises a step of retrieving the total index structure from the storage means 312, and copying it to its local memory subsystem 405, so that the speed of searching in the index table can be considerably increased. Optionally the parameters t, B, AVG, POS, Tmax, etc are also stored in the local memory subsystem 405, and accessible as shared parameters by the software routines or program steps.

The system can be adapted for operating in an automated and/or automatic way. The system furthermore can be adapted for using a predetermined algorithm for processing. The system may be especially suitable for implementing a method as described in the first aspect.

In another aspect, the present invention relates to a data carrier for carrying a computer program product for identifying a particular portion in a time-stamped datastream. Such a data carrier may comprise a computer program product tangibly embodied thereon and may carry machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non-volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

In one aspect, embodiments of the present invention also relate to index structure for use in a method for identifying a file position of target data in a stamped data stream, the index structure comprising a mapping table for the data stream comprising a plurality of blocks, each block correlating a time stamp and a data position of data in the data stream and comprising a distance to the closest previous key data required for correctly calculating later data. The index structure may comprise features and advantages as identified for the index structure described in the first aspect.

In another aspect, embodiments of the present invention also relate to a method for determining an index structure for a data stream, the method comprising deriving from the data stream a mapping table comprising a plurality of blocks, each block correlating a time stamp and a data position of data in the data stream and comprising a distance to the closest previous key data required for correctly calculating later data. The method may be adapted for determining an index structure as described in any of the previous aspects.

By way of illustration, embodiments of the present invention not being limited thereto, two examples of methods illustrating features and advantages of at least some embodiments of the present invention are described below. In the first example the situation is shown whereby the number of blocks is fixed per timestamp. In the second example the situation is shown whereby the number of blocks per time stamp is variable.

Assume in a first example that the index structure has a block with the format (timestamp, distance, byte-offset), and contains the following data: [(0, x, 0), (1, x, 105), (2, x, 191), (3, x, 313), | (4, x, 421), (5, x, 515), (6, x, 612), (7, 3, 708), (8, x, 802)], whereby x is not specified, and whereby '|' symbol is used to identify the start of a key frame. In practice, a flag-bit can be provided in the index structure. The total number of blocks of this index structure is 9 (B=9), and the maximum time-stamp value equals 8 (Tmax=8).Assume further that the size of each block is 6 bytes (S=6), and that the target frame has a time-stamp of 7.

Using the method described above, the average amount of blocks per timestamp AVG calculated in step 202 is 9/(8+1)=1,00. And the first estimated position of the target block in step 203 is floor(1,00*6*7)floor (42,00)= 42. Going to byte offset 42 in the index file brings us indeed to the target block, and because the first estimate was correct, the loop is only executed once. The target block tells us that the distance to the preceding key frame is equal to 3, which refers to the fourth block of the index structure, located at byte offset 42-(3*6)=24 in the index structure. This block holds the byte-offset in the data-stream of the key frame immediately preceeding the target frame, and is equal to 421 in the example. By starting decoding the data-stream from this byte-offset value, the target frame can be decoded and displayed, after skipping some intermediate frames. When the index table also holds byte-offsets that correspond with non-key frames, such information can be used in further processing and/or for selecting non-key frames while still being able to use constant time.

Assume in a second example that the index structure has the same format as in example 1, and contains the following data: [(0, x, 0), (0, x, 105), (0, x, 191), (1, x, 313), (1, x, 421), (2, x, 537), (3, x, 590), (3, x, 701), (4, x, 819), (4, x, 912), | (5, x, 1003), (5, x, 1107), (5, x, 1213), (5, x, 1302), (5, x, 1418), (6, 4, 1503), (6, x, 1608), (7, x, 1709)], whereby x is not speficied, and whereby '|' symbol is used to identify the start of a key frame, thus B=18 and Tmax=7. Again typically a flag-bit can be provided in the index structure.Assume further that the number of bytes per block is 5 (S=5) and the target frame has a time-stamp of 6 (t=6), and that the threshold value TR is 2. Then the algorithm will calculate as the average amount of blocks per timestamp AVG = 18/(7+1)=2.25. And the first estimate for the position of the target block in the index is floor(AVG*5*6)= floor(67.50)= 67. This brings us to the 13^{th} block having the values (5, x, 1213), and having a time-stamp equal to 5, which is close to the target time-stamp of 6. Indeed, the absolute difference between the time-stamps is abs(5-6)=1, which is less than the threshold value of TR=2. Therefore, the loop is ended, and the index structure is sequentially navigated upwards (this means with increasing byte-offset) until a block with time-stamp 6 is reached, which occurs at block nr 16. This block has the values (6, 4, 1503). Subsequently, the method jumps four blocks back to obtain the block corresponding to the key frame preceeding the target frame, and obtains the byte-offset 1107 as the byte-offset in the data-stream corresponding to the start of the key frame, from where decoding is to start.

## Claims

1. A method for identifying a file-position of target data in a time-stamped datastream, the method comprising
- obtaining a time-stamped data stream and an index structure for said data stream, the index structure comprising a mapping table for the data stream comprising a plurality of blocks, each block correlating a time stamp and a data position of data in the data stream,
- obtaining a target timestamp for target data to be found,
- estimating, based on the target timestamp, a position of an estimated target block in the index structure, the estimated target block providing a correlation between an estimated target timestamp and the estimated target data position of data in the data stream and deriving based on the estimated target block a file position of the target data to be found.

2. A method according to claim 1, wherein estimating a position of an estimated target block in the index structure is based on a bi-sectional search algorithm applied to the index structure.

3. A method according to claim 2, wherein estimating a position of an estimated target block in the index structure comprises determining a position of an estimated target block as function of one or more of the average amount of blocks per timestamp, a size of a block and the target timestamp.

4. A method according to any of the previous claims, wherein the index structure comprises a plurality of blocks arranged in an order corresponding to increasing timestamps and wherein estimating a position of an estimated target block comprise selecting an estimated target block without evaluating the plurality of blocks sequentially according to their arranged order.

5. A method according to any of the previous claims, wherein the method comprises, after said estimating an estimated target block in the index structure, evaluating if the estimated target timestamp of said estimated target block corresponding with the target timestamp, is within a predetermined distance from the target timestamp or is outside a predetermined distance of the target timestamp.

6. A method according to claim 5, wherein, if the estimated target timestamp is within a predetermined distance from the target timestamp, the method comprises sequentially running through the index structure starting from the estimated target timestamp until the target timestamp is reached.

7. A method according to any of claims 5 to 6, wherein, if the estimated target timestamp is not within a predetermined distance from the target timestamp, the method comprises estimating a position of an new estimated target block in the index structure and repeating said evaluating for said new estimated target timestamp.

8. A method according to any of the previous claims, wherein, if the target timestamp is found, the method comprises determining using said indexing structure the previous key data required for correctly calculating later data.

9. A method according to claim 8, wherein determining the previous key data using said indexing structure comprises retrieving a distance to the start of the previous key frame as stored in the block corresponding with the target timestamp found.

10. A method according to any of the previous claims, wherein obtaining an indexing structure comprises determining an index structure, whereby the index structure comprises fields representing at least a timestamp, a data position of data in the data stream and a distance to the start of the previous key data in the data stream required for correctly calculating later data.

11. A method according to claim 10, wherein determining an index structure furthermore comprises determining the amount of memory required for representing the maximum value of each one or of the timestamp, the data position of data in the data stream and the distance to the start of the previous key data and reducing the memorysize of the fields to the determined amount of memory required.

12. A system for identifying a file-position of target data in a time-stamped data stream, the system comprising
- an input means for obtaining a time-stamped data stream and an index structure for said data stream, the index structure being a mapping table for the data stream comprising a plurality of blocks, each block correlating a time stamp and a data position of data in the data stream,
the input means furthermore being adapted for obtaining a target timestamp for target data to be found,
- a processing means for estimating, based on the target timestamp, a position of an estimated target block in the index structure, the estimated target block providing a correlation between an estimated target timestamp and the estimated target data position of data in the data stream and for deriving based on the estimated target block a file position of the target data to be found.

13. A system according to claim 12, the system being adapted for performing a method according to any of claims 1 to 11.

14. A system according to any of claims 12 to 13, the system being implemented as a computer program product.

15. A method for determining an index structure for a data stream, the method comprising
deriving from the data stream a mapping table comprising a plurality of blocks, each block correlating a time stamp and a data position of data in the data stream and comprising a distance to the closest previous key data required for correctly calculating later data.
